# EUROPEAN PATENT SPECIFICATION

(11) **EP 1 738 818 B1**
(45) Date of publication and mention of the grant of the patent: **08.09.2010**
(21) Application number: 05014296.7
(22) Date of filing: 30.06.2005
(51) Int. Cl.: B01D 53/56

(54) **Method for the cleaning of flue gases from nitrogen oxides**
Verfahren zur Reinigung von Stickoxide enthaltenden Abgasen
Procédé de purification des gaz résiduaires contenant des oxydes d'azote

(43) Date of publication of application: 03.01.2007
(73) Proprietor: Rossiisky Gosudarstvenny Universitet Nefti i Gaza Im I.M. Gubkina, Moscow GSP-1 119991 (RU); Kulish Olga Nikolaevna, Moscow 129075 (RU)
(72) Inventor: Kuzhevatov, Sergey Aleksandrovich, 105043 Moscow (RU); Gleizer, Iliya Shulimovich, 117393 Moscow (RU); Borodina, Elena Vladimirovna, 628480 Tyumenskaya oblast, g. Kogalym (RU); Kulish, Olga Nikolaevna, 129075 Moscow (RU)
(74) Representative: von Füner, Nicolai

(56) References cited:
- EP-A- 0 342 184
- DE-A1- 19 728 344
- US-A1- 2003 118 494
- US-A1- 2004 208 813
- DATABASE WPI Section Ch, Week 199628 Derwent Publications Ltd., London, GB; Class E36, AN 1996-275563 XP002352147 & RU 2 040 737 C1 (KULISH O N) 27 July 1995 (1995-07-27)

## Description

The present invention relates to the area of cleaning flue gases and can be used for reducing emissions of nitrogen oxide with combustion products from fuel burning units by means of high-temperature selective non-catalytic reduction of nitrogen oxides with the use carbamide (urea).

Methods for the selective non-catalytic high-temperature cleaning of flue gases (SNCR) from nitrogen oxides, US 4,208,386, C1 423/235, 1980 [1]; US 4,325,924, C1 423/235, 1982 [2], are known, wherein carbamide is used for this purpose. Carbamide can be injected into the gas flow to be cleaned at temperatures exceeding 1300°F (the temperatures of the gases to be cleaned preferably not exceeding 1900 [1] - 2500°F [2]), in the form of dry powder, melt, or its solution in a solvent, or a mixture of solvents.

The drawbacks of the above-mentioned methods are as follows: low efficiency of the process of cleaning waste gases from nitrogen oxides; high content of the secondary pollutant, i.e. ammonia, in the cleaned gases; and also the narrow temperature interval, which fact limits the efficiency of the cleaning processes taking place within the interval.

In a number of patents, including the above-mentioned ones, the increase of the efficiency of the process of cleaning gases from nitrogen oxides with the use of carbamide is proposed to be effected by means of applying a number of other reducing chemical substances alongside with carbamide (US 4,751,065, C1 423/235 1988; US 4,844,878, C1 423/235, 1989; US 4,888,165, C1 423/235, 1989).

The disadvantages of the methods mentioned above are also low efficiency of the process of cleaning the waste gases from nitrogen oxides; high content of the secondary pollutant, i.e. ammonia, in the cleaned gases; and also the narrow temperature interval, which fact limits the efficiency of the cleaning processes taking place within the interval.

The improvement of the process of cleaning gases from nitrogen oxides with the use of carbamide directed at the increase of the process efficiency as well as the reduction of secondary pollutants (mainly ammonia) emission is described in the patents US 4,777,024, U.S. C1 423/235, 1988; US 4,780,289, U.S. C1 423/235, 1988. The addition of various chemical substances made it possible to reduce the ammonia content in the cleaned gases to 30-90 ppm.

The disadvantage of the above-mentioned methods is the requirement to apply additional chemical reagents, as well as the process being insufficiently effective in relation to cleaning gases from nitrogen oxides (to 50-60%).

A method of cleaning flue gases from nitrogen oxides, US 5,240,688, U.S. C1 423/235, 1993, is known, wherein the products of carbamide hydrolysis are applied to a flow of the gases to be cleaned, the given patent stating that a water solution is used for carbamide hydrolysis, the hydrolysis process being carried out at the temperature of 300-500°F and for a period of, at least, not less than three minutes (in fact it takes not less than a six-minute period of time to complete the reaction of urea hydrolysis) with at least, one of the further listed products, or their mixtures being formed: ammonium carbonate, ammonium bicarbonate and ammonia. The hydrolysis rate can be increased by means of carrying out the reaction under a higher pressure (1200-1500 psi), or by way of applying hydrolyzing agents to a neutral urea water solution, i.e., the substances altering the pH of a carbamide water solution. It is also possible to use mixtures containing (apart from carbamide hydrolysis products) a number of organic compounds for cleaning waste gases from nitrogen oxides, which allows satisfactory cleaning of waste gases from nitrogen oxides at lower temperatures.

The disadvantages of the given method are also low efficiency of cleaning waste gases from nitrogen oxides, as well as the application of additional reagents, which might increase the efficiency of the given cleaning method.

The closest prior art to the invention along the lines of its technicality and the results achieved is the method of cleaning flue gases from nitrogen oxides under the patent of Russian Federation RU 2040737, Cl F 23 J 15/00, 1992, according to which the cleaning of combustion products of fuel burning units from nitrogen oxides is carried out by way of injecting a gas-vapor reducing mixture previously obtained as a result of urea thermo-hydrolysis in a water solution at 60 to 150°C with the subsequent evaporation of the reaction mixture at 100 to 350°C by means of superheated vapor into the area of waste gases at 700 to 1200°C. The processes of thermo-hydrolysis and evaporation of the reducing mixture obtained as a result of thermo-hydrolysis are carried out in reactors arranged sequentially.

The disadvantages of the method mentioned above are low efficiency of the process of cleaning the waste gases from nitrogen oxides within a wide temperature interval of the cleaned gases, the pollution of waste gases with secondary pollutant, i.e. ammonia, and also the complexity of the technological process for obtaining the reducing mixture.

The problem on which the present invention is based is the simplification of the process flow sheet of cleaning waste gases from nitrogen oxides, the increase of gas cleaning efficiency within a wider temperature interval of the combustion products to be cleaned as well as a considerable reduction of the amount of the secondary pollutant, i.e. ammonia, in the cleaned gases.

The problem on which the present invention is based is achieved by means of the fact that the method for selective non-catalytic cleaning of flue gases from nitrogen oxides involves the feeding of a previously prepared gas-vapor reducing mixture to the gas flue of a fuel burning unit with the temperature of the flow of the gases being at 700 to 1200°C, **characterized in that** the gas-vapor reducing mixture is obtained in a high-velocity reactor connected to the gas flue within a time period of 0,5 to 5 sec by bringing a carbamide water solution into contact with superheated vapor having a temperature from 200 to 400°C and under a pressure of 3 to 10 atm.

The problem is also achieved by the fact that the concentration of the carbamide water solution preferably is from 20% to 40% by weight, while the pressure is preferably from 3 to 6 atm.

The problem is also achieved by the fact that preferably air, vapor, or flue gases are used as a carrier gas, which arranges the reducing mixture within a flow of gases to be cleaned uniformly.

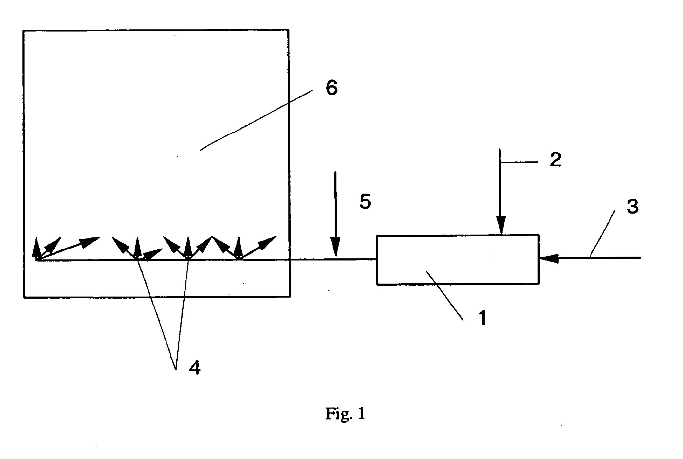

The schematic diagram of the technological process of selective non-catalytic high-temperature cleaning of flue gases from nitrogen oxides is shown in Fig.1.

A carbamide water solution is fed along line 2 into a high-velocity reactor 1 at concentrations from 20% to 40% by weight, superheated vapor being fed at 200 to 400°C along line 3. Devices like desuperheaters [1978, 249-250 (L.N. Sidelkovskiy, V.N. Yurenev, "Parogenerator'i prom'ishlennyh predpriyatuiy", Energiya, Moskva, 1978, pp. 249-250] used in steam generation can be used as high-velocity reactors.

The volume of gases to be cleaned and their nitrogen oxide concentration determine the consumption of carbamide solution. The consumption of superheated vapor depends on the consumption of carbamide solution and can make 15 to 30 kg per 1 kg of the solution. Urea water solution and superheated vapor are brought into contact with each other for 0.5 to 5.0 sec under a pressure of 3 to 10 atm in the high-velocity reactor, as a result of which there occurs carbamide thermal decomposition and evaporation of the products of decomposition with the formation of a gas-vapor reducing mixture, which is fed through nozzles 4 connected to the high-velocity reactor exit by means of carrier gas feed line 5 to gas flue 6 where the gas flow temperature level is 700 to 1200°C.

The following examples just illustrate the invention, but do not limit it.

Example 1 (closest prior art). A steam generator with steam output of 100 t/hr worked under 50% load conditions. The process of cleaning flue gases was carried out by means of a gas-vapor reducing mixture obtained by way of preliminary thermo-hydrolysis of 20% urea water solution and the subsequent evaporation of the substances formed thereby. The adding of superheated vapor at 250°C temperature and under 5 atm pressure ensured the evaporation. The results of the tests are shown in Table 1.

**Table 1**

| Mode | Temperature of gases in carbamide input area [°C] | NOₓ content [mg/m³] | | Cleaning efficiency [%] | NH₃ content after cleaning [mg/m³] |
|---|---|---|---|---|---|
| | | Before carbamide input | After carbamide input | | |
| 1 | 1006 | 181 | 54 | 70 | 26 |
| 2 | 1006 | 131 | 32 | 76 | 21 |
| 3 | 1006 | 121 | 38 | 69 | 19 |

Example 2. The process of cleaning flue gases was carried out in an incinerator. The volume of gases to be cleaned was 40 000 nm³/hr. As a reducing agent there was used carbamide water solution at concentration of 40% by weight. The consumption of the carbamide solution amounted to 10-20 kg/hr. The process of cleaning flue gases was carried out by means of a gas-vapor reducing mixture previously received in a high-velocity reactor by bringing into contact for 1 sec 40% carbamide water solution with superheated water vapor at a temperature of 250°C and under the pressure of 5 atm. The consumption of superheated vapor reached 300-600 kg/hr. The results of the tests are shown in Table 2.

**Table 2**

| Mode | Temperature of gases in carbamide input area [°C] | NOₓ content [mg/m³] | | Cleaning efficiency [%] | NH₃ content after cleaning [mg/m³] |
|---|---|---|---|---|---|
| | | Before carbamide input | After carbamide input | | |
| 1 | 990 | 289 | 35 | 88 | 2 |
| 2 | 950 | 314 | 50 | 84 | 5 |
| 3 | 860 | 295 | 89 | 70 | 11 |
| 4 | 1010 | 288 | 32 | 89 | 2 |
| 5 | 870 | 291 | 81 | 72 | 10 |
| 6 | 960 | 300 | 41 | 86 | 4 |
| 7 | 840 | 280 | 92 | 67 | 13 |
| 8 | 890 | 266 | 67 | 75 | 9 |

The analysis of the results of cleaning waste flue gases from nitrogen oxides according to the closest prior art as compared to the invention has shown significant increase of the cleaning efficiency of gases, and also the expansion of the temperature interval of the effective process running with the use of the present method. Besides, the concentration of the secondary pollutant, i.e. ammonia, is considerably reduced in the cleaned gases.

## Claims

1. A method for the selective non-catalytic cleaning of flue gases from nitrogen oxides comprising the feeding of a previously prepared gas-vapor reducing mixture to the gas flue of a fuel burning unit with the temperature of the flow of the gases to be cleaned being at 700 to 1200°C, **characterized in that** the gas-vapor reducing mixture is obtained in a high-velocity reactor, connected to the gas flue, within a time period of 0,5 to 5 sec by bringing a carbamide water solution into contact with superheated vapor having a temperature from 200 to 400°C and under a pressure of 3 to 10 atm.

2. The method according to claim 1 **characterized in that** the concentration of the carbamide water solution is from 20% to 40% by weight.

3. The method according to claim 1 **characterized in that** the time period of the contact of the carbamide water solution with superheated vapor is mainly from 0,5 to 2 sec.

4. The method according to claim 1 **characterized in that** the pressure is mainly from 3 to 6 atm.

5. The method according to claim 1 **characterized in that** water vapor, air, or flue gases are used as a gas-carrier.

## Patentansprüche

1. Verfahren zur selektiven nichtkatalytischen Entfernung von Stickoxiden aus Rauchgasen durch Zufuhr eines vorgängig hergestellten Gas-Dampf-Reduktionsgemisches zum Gasabzug einer Brennstoffverbrennungsanlage bei einer Temperatur des Stroms der zu reinigenden Gase von 700 bis 1200° C, **dadurch gekennzeichnet, daß** das Gas-Dampf-Reduktionsgemisch in einem mit dem Gasabzug verbundenen Hochgeschwindigkeitsreaktor während einer Zeitdauer von 0,5 bis 5 Sekunden durch Kontaktierung einer Harnstoff-Wasser-Lösung mit Heißdampf mit einer Temperatur von 200 bis 400° C und unter einem Druck von 3 bis 10 atm erhalten wird.

2. Verfahren nach Anspruch 1, **dadurch gekennzeichnet, daß** die Konzentration der Harnstoff-Wasser-Lösung 20 bis 40 Gew.-% beträgt.

3. Verfahren nach Anspruch 1, **dadurch gekennzeichnet, daß** die Dauer der Kontaktierung der Harnstoff-Wasser-Lösung mit dem Heißdampf meist 0,5 bis 2 Sekunden beträgt.

4. Verfahren nach Anspruch 1, **dadurch gekennzeichnet, daß** der Druck meist 3 bis 6 atm beträgt.

5. Verfahren nach Anspruch 1, **dadurch gekennzeichnet, daß** als Gasträger Wasserdampf, Luft oder Rauchgase verwendet werden.

## Revendications

1. Procédé pour le nettoyage non catalytique sélectif de gaz d'échappement d'oxydes d'azote, comprenant l'alimentation d'un mélange réducteur de gaz-vapeur préparé au préalable dans l'échappement de gaz d'une unité de combustion de carburant avec la température du flux des gaz devant être nettoyés étant à 700 à 1 200°C, **caractérisé en ce que** le mélange réducteur de gaz-vapeur est obtenu dans un réacteur à grande vitesse, connecté à l'échappement de gaz, pendant une période de temps de 0,5 à 5 s en mettant une solution aqueuse de carbamide en contact avec une vapeur surchauffée ayant une température de 200 à 400°C et sous une pression de 3 à 10 atm.

2. Procédé selon la revendication 1 **caractérisé en ce que** la concentration de la solution aqueuse de carbamide est de 20% à 40% en poids.

3. Procédé selon la revendication 1 **caractérisé en ce que** la période de temps du contact de la solution aqueuse de carbamide avec la vapeur surchauffée est essentiellement de 0,5 à 2 s.

4. Procédé selon la revendication 1 **caractérisé en ce que** la pression est essentiellement de 3 à 6 atm.

5. Procédé selon la revendication 1 **caractérisé en ce que** de la vapeur d'eau, de l'air, ou des gaz d'échappement sont utilisés comme un porteur de gaz.
